# EUROPEAN PATENT APPLICATION

(11) **EP 0 648 053 A2**
(43) Date of publication of application: **12.04.1995**
(21) Application number: 94115935.2
(22) Date of filing: 10.10.1994
(51) Int. Cl.: H04N 7/087, H04N 7/00

(54) **Teletext signals receiver with a framing code position detector**

(30) Priority: 12.10.1993 IT TO930739
(71) Applicant: SELECO S.p.A., I-33170 Pordenone (IT)
(72) Inventor: Leonarduzzi, Antonio, I-33030 Maiano (UD) (IT)
(74) Representative: Dini, Roberto, Dr. Ing.

(57) **Abstract**

A teletext signals receiver is described, in particular incorporated within a television signals receiver; the main characteristic of the described receiver consists in the fact that it provides a detecting circuit of the position of the Framing code.

## Description

The present invention refers to a teletext signals receiver, in particular incorporated within a television signals receiver.

The transmission of teletext signals, i.e. the transmission of data in a digital form , inserted in a television signal is well known.

It is also known how important it is to reduce the number of errors during the reception of teletext signals, in particular during very long transmissions, as is the case of "telesoftware" or "datavideo".

The teletext transmission is realised in packets of 42 "byte" each, inserted in some of the television lines during the frame return; for simplicity for herein on such lines shall be indicated with the term "teletext lines".

Every teletext line transports the information of 42 "byte"; this information is preceded by 3 byte, more precisely constituted by 2 "run-in" byte and by 1 "framing code" byte.

The "run-in" constitutes the information for the correct synchronisation of the "clock" of the receiver; the "framing code" constitutes the key for understanding whether a line is transporting teletext information or not; it is therefore extremely important that this is detected without errors.

The position of the "framing code" within a teletext line is unfortunately not fixed, but depends on various variable factors, such as:
- tolerances that are different from one broadcaster to the next;
- group delay presented by the tuner used in the television receiver;
- circuit tolerances that provide for extracting the teletext signals from the video signal ("data slicer");
- differences in the locking points of the PLL circuit (Phase Locked Loop) of the receiver; etc.

It is therefore usual that the known receivers open a temporal window of a size sufficient to take into consideration all the aforementioned tolerances; unfortunately this leads to the consequence of a greater probability of errors in the decoding of the "framing code" and, as a result, in the reception of the teletext signal.

The aim of the present invention is that of indicating how it is possible to reduce such error probability and as a result improve the correct reception characteristics of the signals. For reaching such aims the present invention has as its subject a teletext signals receiver, in particular incorporated within a television signals receiver, characterised in that it provides a detecting circuit of the position of the "Framing code".

Further characteristics and advantages of the present invention shall result in being clear from the following description and annexed drawings supplied purely as an explanatory and non-limiting example, wherein:
- figure 1 represents in a schematic manner a line of the television signal within which the teletext signal is inserted;
- figure 2 represents an enlarged view of the beginning of the teletext signal;
- figure 3 represents the block diagram of the relevant part of the circuit of the teletext signals receiver according to the invention.

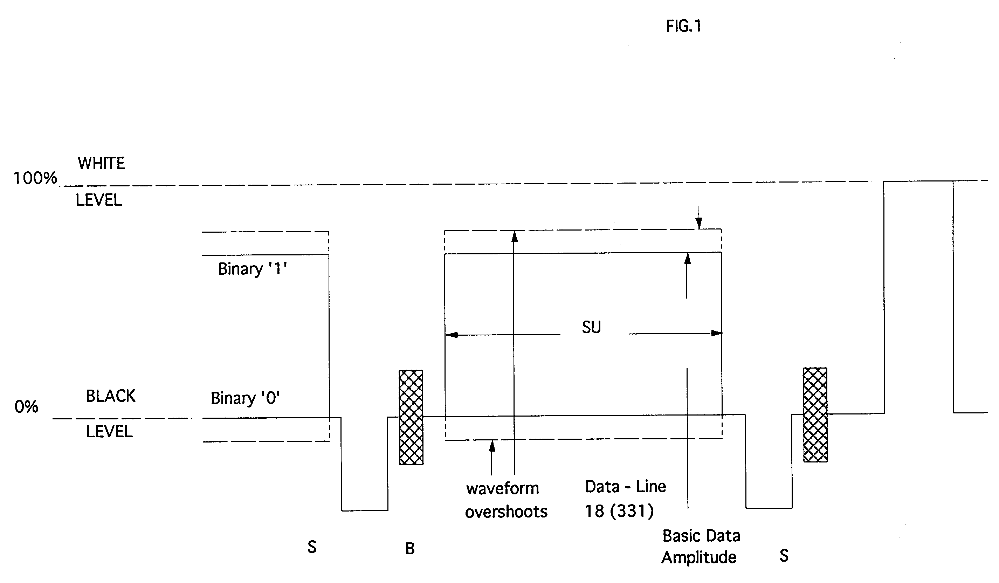

Figure 1 represents in a schematic manner a line of the television signal within which the teletext signal is inserted; as is seen in such figure, the teletext signal is transmitted in the useful space (SU) of the line, after the line synchronism signal (S) and the colour synchronism signal (B, the so-called "burst").

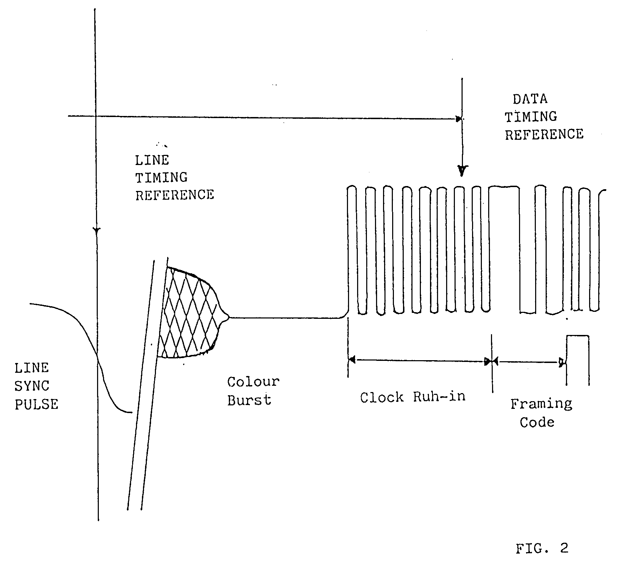

In figure 2 an enlarged view of the beginning of the teletext signal is represented; in which the "run-in" signal and the successive "framing code" signal are visible.

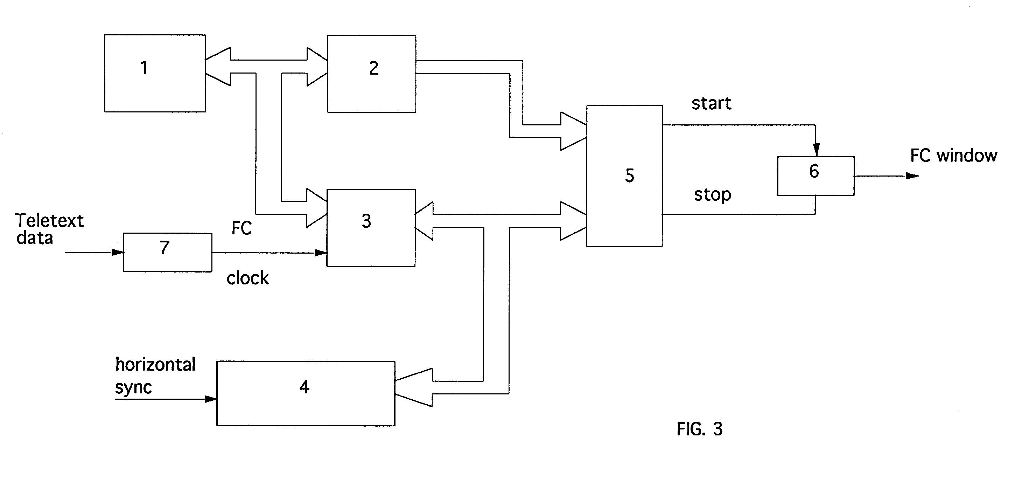

In figure 3 the block diagram of the relevant part of the circuit of the teletext signals receiver according to the invention is represented.

In figure 3 the block indicated with reference number 1 represents an interface of a personal computer, not represented in the figure, such interface has an 8 bit bus and permits the exchange of the information and the programming of the position of the window on the "framing code".

The block indicated with reference number 2 represents an 8 bit memory register, containing the initial/final values of the "framing code" window; such values are written in the register of the personal computer, after having read the value of block 3 and calculated, by way of appropriate routine software, the new values of block 2.

The block indicated with reference number 3 represents a 4 bit memory register which contains the instant of time, generated by block 4, in which the decoding event of the "framing code" by block 7 is verified; more precisely the instant is identified by block 7 in which the final bit of the "Framing code" is read and such instant is stored in the register 3; more precisely that which is stored is the number of microseconds passed from the initial front of the line synchronism signal and the instant in which the final bit of the framing code is read.

The block indicated with reference number 4 represents a generator of time base locked to the line frequency (64 microseconds); 4 bit are utilised, to be sent to block 5, that determines the maximum size of the window, equal to 8 microseconds (16x2 MHz).

The block indicated with reference number 5 represents a comparator that compares the initial/final window values and the time base; two start/stop impulses are in this way generated that are sent to block 6.

The block indicated with reference number 6 represents a set/reset register that generates the window impulse placed exactly on the "framing code" (or, more precisely, on the final bit of the "framing code"); such impulse normally has the dimension of only 1,5 microseconds.

The block indicated with reference number 7 represents a register of decoding teletext data and of acknowledgement the "framing code" sequence; it generates an impulse for block 3; the temporal value is memorised within the line duration to then recalculate the values to supply to block 2.

The window position is determined by steps of 500 nanoseconds each, obtaining in this way a considerable positioning precision; as mentioned the maximum dimensions of the window is of 8 microseconds (16 steps).

The "framing code" position detecting circuit is preferably activated a certain number of times (for example 3 or 5) from the moment of the beginning of the teletext reception; it is then switched off by the personal computer, to be then be reactivated the moment in which a different broadcaster is selected.

The decoding of the "framing code" is carried out in optimal conditions, independently from the aforementioned position tolerances.

The described circuit has been realised by means of a ASIC (Application Specific Integrated Circuit) component and can easily be inserted in a board to be inserted in a personal computer.

From the given description the characteristics of the teletext signals receiver subject of the present invention result in being clear, as do its advantages.

In particular the teletext signals receiver according to the invention allows for determining with considerable precision the position of the "framing code" and to open a window of a dimension equal to the "framing code" signal itself; in such way a considerable reduction of the probability of errors in the actual decoding is obtained.

It is clear that numerous variants can be applied to the teletext signals receiver subject of the present invention, without for this departing from the novelty principles inherent in the innovative idea, as it is clear that in the practical realisation of the invention the materials and forms of the illustrated details may be different, and they may be substituted by technically equivalent elements.

For example instead of the union with a personal computer, as in the described example, the circuit according to the invention can be realised in union with a television signals receiver, such as a television set or video recorder, and controlled by a microprocessor contained within.

## Claims

1. Teletext signals receiver, in particular incorporated within a television signals receiver, characterised in that it provides a detecting circuit of the position of the Framing code.

2. Teletext signals receiver, according to claim 1, characterised in that it provides for opening an exact temporal window on the "framing code", of slightly larger dimensions than the "framing code" itself.

3. Teletext signals receiver, according to claim 2, characterised in that said window has the maximum amplitude of 8 microseconds.

4. Teletext signals receiver, according to claim 2, characterised in that the said window has the amplitude of approximately 1,5 microseconds.

5. Teletext signals receiver, according to claim 4, characterised in that the said window is positioned on the effective "framing code" with a precision of approximately 500 nanoseconds.

6. Teletext signals receiver, according to claim 5, characterised in that the said window is positioned on the final bit of the "framing code" with a precision of 500 nanoseconds.

7. Teletext signals receiver, according to claim 1, characterised in that the said detecting circuit of the position of the "Framing code" is activated several times the moment in which the teletext reception is selected, to then be switched off upon the next selection of a station that transmits teletext signals.

8. Teletext signals receiver, according to claim 2, characterised in that it comprises a microprocessor for controlling the positioning of the window.

9. Teletext signals receiver, according to claim 1, characterised in that it comprises a board inserted in a personal computer.

10. Teletext signals receiver, according to claim 2, characterised in that the positioning of said window takes place with respects to the initial front of the line synchronism signal.

11. Teletext signals receiver, according to claim 2, characterised in that the positioning of said window takes place by detecting the instant in which the final bit of the "framing code" is read.
